# EUROPEAN PATENT APPLICATION

(11) **EP 4 672 868 A1**
(43) Date of publication of application: **31.12.2025**
(21) Application number: 24185312.6
(22) Date of filing: 28.06.2024
(51) Int. Cl.: H05B 47/175, G01S 5/18, G01S 5/30, H04W 4/02

(54) **LOCATION ESTIMATION IN A LIGHTING CONTROL NETWORK**

(71) Applicant: Helvar Oy Ab, 02150 Espoo (FI)
(72) Inventor: Juslén, Henri, 02150 Espoo (FI); Hellström, Lars, 02150 Espoo (FI)
(74) Representative: Berggren Oy

(57) **Abstract**

According to an embodiment, a lighting system (100) for illuminating one or more spaces is provided, the lighting system (100) comprising a plurality of lighting network nodes (110) and a processing apparatus (120), wherein the plurality of lighting network nodes (110) are communicatively coupled to each other via a lighting control network (130) and wherein the processing apparatus (120) is communicatively coupled to at least one of the plurality of lighting network nodes (120), wherein the plurality of lighting network nodes (120) comprises a plurality of sound-emitting nodes that each comprise a respective sound generator and one or more sound-receiving nodes that each comprise a respective sound sensor, wherein each of the sound-emitting nodes is arranged to operate the respective sound generator to emit one or more sounds, wherein each of the sound-receiving nodes is arranged to operate the respective sound sensor to capture the respective one or more sounds emitted from at least one of the plurality of sound-emitting nodes, and wherein the processing apparatus (120) is arranged to estimate respective locations of the plurality of lighting network nodes (110) in said one or more spaces based on characteristic of sounds received at the one or more sound-receiving nodes in relation to characteristics of the respective sounds emitted from the plurality of sound-emitting nodes

## Description

### TECHNICAL FIELD

The present invention relates to location estimation and/or commissioning of nodes of a lighting control network.

### BACKGROUND

Lighting control systems applied for illuminating large spaces or areas may include hundreds or even thousands of devices, including e.g. luminaires, sensor devices, control devices, user-interface elements and/or gateway devices, that are communicatively coupled to each other via a lighting control network. Consequently, each device of the lighting system may be considered as a respective lighting network node of the lighting control network.

Communication between lighting network nodes via the lighting control network requires knowledge of the respective identities of the lighting network nodes, whereas meaningful lighting control requires at least approximate knowledge of respective locations of the lighting network nodes in the spaces or areas the lighting system serves to illuminate. The knowledge of the respective identities and locations of the lighting network nodes is typically also crucial information for subsequent maintenance of the lighting system. The process of providing at least some of the lighting network nodes with information about respective identities and locations of the other lighting network nodes of the lighting control network may be referred to as (lighting network) commissioning, which is typically carried out upon installing, configuring or reconfiguring the lighting system at the site of its operation.

The most straightforward approach for the lighting network commissioning involves manual configuration of the relevant lighting network nodes with the information of respective identities and locations of the other lighting network nodes. In case of large lighting systems the manual configuration constitutes a significant (if not unfeasible) effort and is also prone to errors. In a more advanced approach the lighting system involves lighting network nodes provided with equipment that enable partially automated lighting network commissioning via a procedure carried out between the lighting network nodes with limited involvement a human operator (in comparison to the manual commissioning). As an example in this regard, the lighting network nodes may wirelessly communicate with each other and the commissioning may rely on observed physical characteristics of the radio signals transmitted from and received at the lighting network nodes.

Nevertheless, commissioning approaches known in the art do not provide satisfactory flexibility and/or reliability in various operating environments and/or conditions and, therefore, improved approaches for carrying out the lighting network commissioning would be highly desirable.

### SUMMARY

It is an object of the present invention to provide a novel technique for estimating respective locations of nodes of a lighting control network in an automated or semi-automated manner via a procedure carried out between the nodes of the lighting control network.

According to an embodiment, a lighting system for illuminating one or more spaces is provided, the lighting system comprising a plurality of lighting network nodes and a processing apparatus, wherein the plurality of lighting network nodes are communicatively coupled to each other via a lighting control network and wherein the processing apparatus is communicatively coupled to at least one of the plurality of lighting network nodes, wherein the plurality of lighting network nodes comprises a plurality of sound-emitting nodes that each comprise a respective sound generator and one or more sound-receiving nodes that each comprise a respective sound sensor, wherein each of the sound-emitting nodes is arranged to operate the respective sound generator to emit one or more sounds, wherein each of the sound-receiving nodes is arranged to operate the respective sound sensor to capture the respective one or more sounds emitted from at least one of the plurality of sound-emitting nodes, and wherein the processing apparatus is arranged to estimate respective locations of the plurality of lighting network nodes in said one or more spaces based on characteristic of sounds received at the one or more sound-receiving nodes in relation to characteristics of the respective sounds emitted from the plurality of sound-emitting nodes.

According to another embodiment, a method in a lighting system that is applicable for illuminating one or more spaces is provided, wherein the lighting system comprising a plurality of lighting network nodes that are communicatively coupled to each other via a lighting control network, the method comprising: emitting, from a plurality of sound-emitting nodes among the plurality of lighting network nodes, respective one or more sounds; capturing, at one or more sound-receiving nodes among the plurality of lighting network nodes, the respective one or more sounds emitted from at least one of the plurality of sound-emitting nodes; and estimating respective locations of the plurality of lighting network nodes in said one or more spaces based on characteristic of sounds received at the one or more sound-receiving nodes in relation to characteristics of the respective sounds emitted from the plurality of sound-emitting nodes.

The exemplifying embodiments of the invention and variations thereof presented in this patent application are not to be interpreted to pose limitations to the applicability of the appended claims. Moreover, the verb "to comprise" and its derivatives are used in the present disclosure to indicate an open limitation that does not exclude the existence of also unrecited features.

Some features of the invention are set forth in the appended claims. Aspects of the invention, however, both as to its construction and its method of operation, together with additional objects and advantages thereof, will be best understood from the following description of example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a lighting system according to an example;
Figure 1B illustrates a block diagram of some components of a lighting system according to an example;
Figure 1C illustrates a block diagram of some components of a lighting system according to an example;
Figure 1D illustrates a block diagram of some components of a lighting system according to an example;
Figure 2 illustrates a method according to an example; and
Figure 3 illustrates a block diagram of some components of an apparatus according to an example.

### DESCRIPTION OF SOME EMBODIMENTS

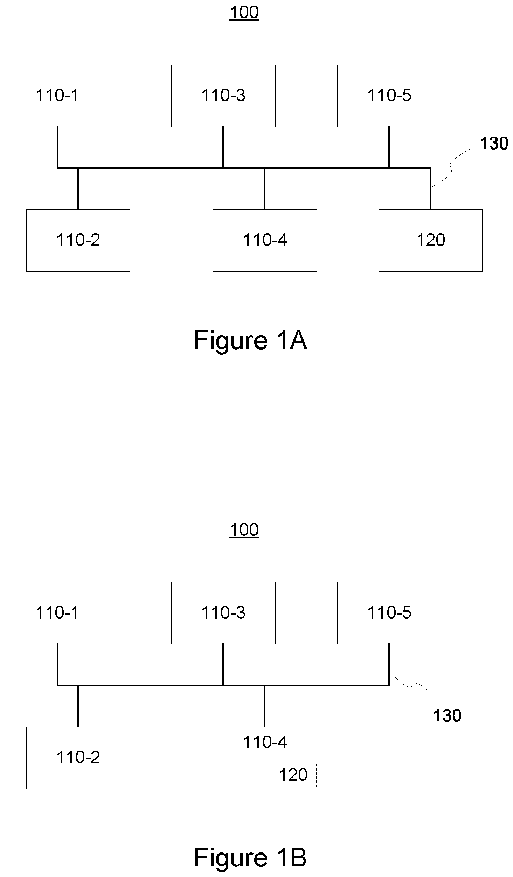

Figure 1A illustrates a block diagram of some elements of a lighting system 100 according to an example. The lighting system 100 is applicable for illuminating one or more spaces or areas, e.g. one or more indoor spaces and/or one or more outdoor areas. In the exemplifying illustration of Figure 1A, the lighting system 100 is shown as an arrangement of lighting network nodes 110-1, 110-2, 110-3, 110-4, 110-5 that are communicatively coupled to each other via a lighting control network 130. The lighting network nodes 110-1, 110-2, 110-3, 110-4, 110-5 represent a plurality of lighting network nodes that may be collectively referred to via a reference number 110, whereas an individual lighting network node may be referred to via a reference number 110-k.

The lighting system 100 may further comprise a processing apparatus 120, which is communicatively coupled to at least one of the plurality of lighting network nodes 120. In the example of Figure 1A the processing apparatus 120 is provided as a dedicated node of the lighting control network 130, thereby communicatively coupling the processing apparatus 120 via the lighting control network 130 to the plurality of lighting network nodes 110. Figure 1B illustrates the lighting system 100 according to another example, where the processing apparatus 120 is integrated or embedded to the lighting network node 110-4. The example of Figure 1B generalizes into the processing apparatus 120 being integrated or embedded to one of the lighting network nodes 110-k, thereby providing an arrangement where the processing apparatus 120 is communicatively coupled to the other ones of the plurality of lighting network nodes 120 via the lighting network node 110-k.

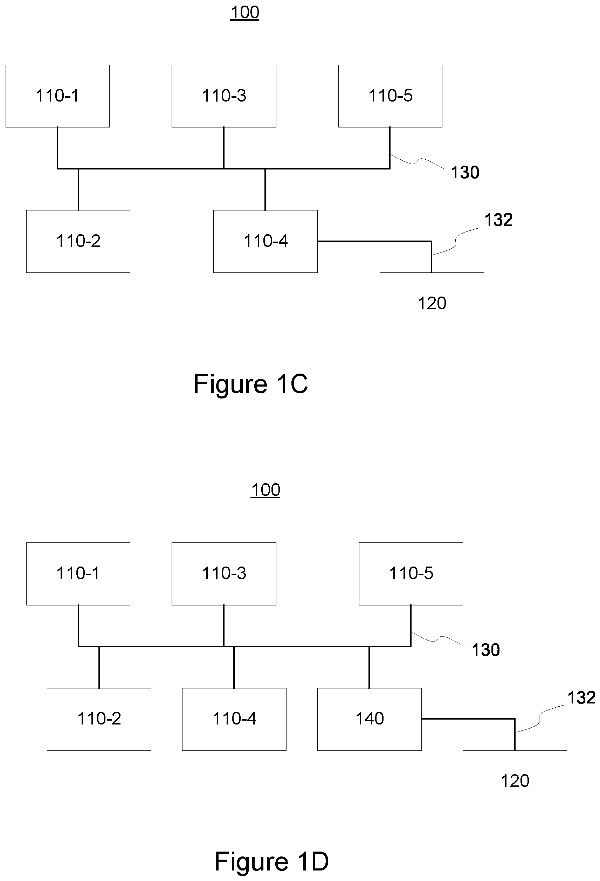

Figure 1C illustrates the lighting system 100 according to a further example, where the processing apparatus 120 is communicatively coupled to the lighting network node 110-4 via an external network 132 that is separate from the lighting control network 130. The example of Figure 1C generalizes into the processing apparatus 120 being communicatively coupled to one of the lighting network nodes 110-k via the external network 132 that is separate from the lighting control network 130, thereby providing an arrangement where the processing apparatus 120 is communicatively coupled to the other ones of the plurality of lighting network nodes 120 via the lighting network node 110-k. The external network 132 may comprise, for example, an internet. Figure 1D illustrates the lighting system 100 according to a yet further example, where the lighting system 100 further comprises a gateway apparatus 140 for coupling external entities to the lighting control network 130. In this example, the gateway apparatus 140 is communicatively coupled to the plurality of lighting network nodes 110 via the lighting control network 130, whereas the processing apparatus 120 is communicatively coupled to the gateway apparatus 140 via the external network 132.

In the respective examples of Figures 1A, 1B, 1C and 1D the lighting control network 130 is (implicitly) illustrated as a wired network or as a wired bus. In such examples of implementing the lighting system 100, the communication over the wired network or wired bus may be provided using a predefined lighting control protocol, such as the Digital Addressable Lighting Interface (DALI) specified in a series of technical standards IEC 62386. Other examples of providing the communication over the wired network or wired bus serving as the lighting control network 130 include Power over Ethernet (PoE) and packet switched communication networks such as Internet Protocol (IP) based networks. In further examples, the lighting control network 130 may be provided as a wireless short-range communication network. Non-limiting examples of suitable wireless communication techniques for implementing the lighting control network 130 include Bluetooth, Bluetooth Low-Energy (LE), ZigBee, WLAN/Wi-Fi according to an IEEE 802.11 family of standards. In a particular example of making use of wireless communication techniques, the lighting control network 130 may be provided as a wireless mesh network, e.g. one according to the Bluetooth or Bluetooth LE Mesh networking protocol. Communication between entities of the communication network 130 provided as a wireless short-range communication network may apply a communication protocol known in the art, such as the Matter standard.

The examples described via the respective illustrations of Figures 1A, 1B, 1C and 1D refer to the nodes of the lighting control network 130 simply as lighting network nodes 110-k. As a non-limiting example in this regard, each of the plurality of lighting network nodes 110 may comprise e.g. one of the following: a luminaire for illuminating a respective portion of the one or more spaces or areas, a sensor apparatus comprising one or more sensors for observing respective environmental characteristics at a respective portion of the one or more spaces or areas, a lighting control apparatus for controlling light output from one or more luminaires of the lighting system 100, a user interface apparatus for controlling one or more aspects of operation of the lighting system 100, a lighting control gateway for coupling the lighting control network 130 to one or more entities that are not directly coupled to the lighting control network 130, etc. In other words, in a non-limiting example, the plurality of lighting network nodes 110 may comprise e.g. one or more of the following:
- one or more luminaires,
- one or more sensor apparatuses,
- one or more lighting control apparatuses,
- one or more user interface apparatuses,
- one or more lighting control gateways.

In the following examples, however, this disclosure predominantly refers to lighting network nodes 110-k in general to avoid implying any unintended limitations to a specific arrangement of lighting network nodes of specific types.

The plurality of lighting network nodes 110 comprises a plurality of nodes provided with a respective sound generator. These nodes may be referred to as respective sound-emitting nodes. The plurality of lighting network nodes 110 also comprises one or more nodes provided with a respective sound sensor. These nodes may be referred to as respective sound-receiving nodes. In terms of sound generation and sound reception, a given lighting network node 110-k may serve as a sound-emitting node, as a sound-receiving node, or as a sound-emitting and sound-receiving node. Moreover, in some examples, one or more nodes of the lighting control network 130 do not include either a sound generator or a sound sensor and, consequently, such nodes do not serve either as sound-emitting nodes or as sound-receiving nodes.

According to a non-limiting example, the lighting system 100 comprises a plurality of luminaires serving as respective sound-emitting nodes together with one or more sensor apparatuses and/or one or more lighting control apparatuses serving as respective sound-receiving nodes. In another example, the lighting system 110 comprises a plurality of luminaires and one or more sensor apparatuses serving as respective sound-emitting nodes together with one or more lighting control apparatuses serving as respective sound-receiving nodes. In a further example, the lighting system 100 comprises a plurality of luminaires that each serve as a respective sound-receiving node with at least some of the plurality of luminaires further serving as respective sound-receiving nodes. In a further example, each lighting network node of the lighting system 100 serves both as a sound-emitting node and a sound-receiving node.

Each lighting network node 110-k that serves as a respective sound-emitting node is arranged to operate the sound generator included therein to emit one or more sounds, whereas each lighting network node 110-k that serves as a respective sound-receiving node is arranged to capture the respective one or more sounds emitted from sound-emitting nodes. In this regard, depending on the respective locations of the one or more sound-receiving nodes in relation to respective locations of the plurality of sound-emitting nodes and the one or more sound-receiving nodes, a certain sound-receiving node may be able to
- capture at least some of the respective one or more sounds originating from each of the plurality of sound-emitting nodes,
- capture at least some of the respective one or more sounds originating from a (limited) subset of the plurality of sound-emitting nodes, or
- capture none of the respective one or more sounds originating from any of the plurality of sound-emitting nodes.

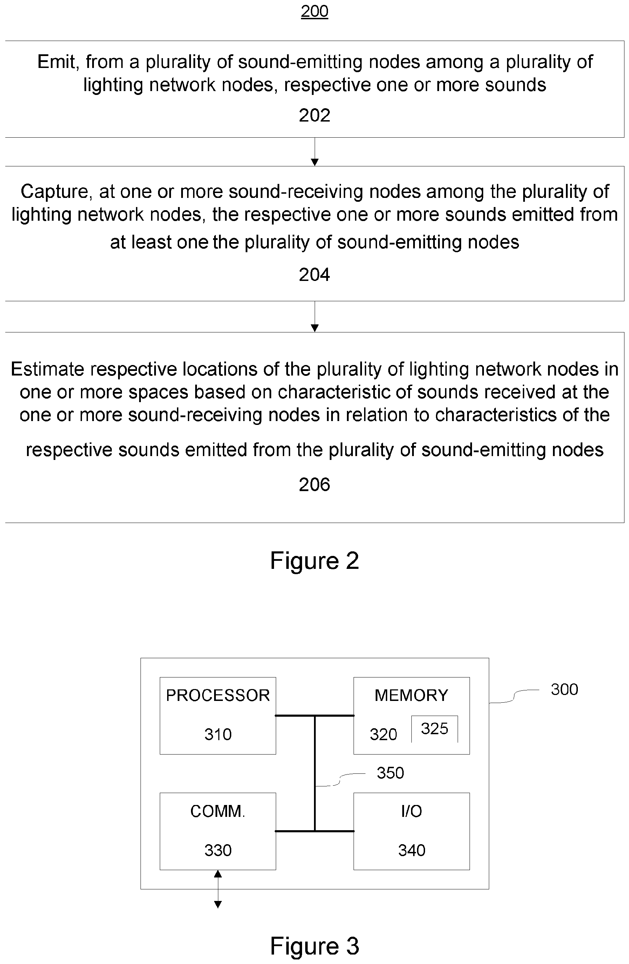

The processing apparatus 120 is arranged to estimate respective locations of the plurality of lighting network nodes in the one or more spaces or areas based on characteristic of sounds received at the one or more sound-receiving nodes in relation to characteristics of the respective sounds emitted from the plurality of sound-emitting nodes. The processing apparatus 120 may be implemented via operation of a computer apparatus that comprises one or more processors and one or more memories, where the one or more memories are arranged to store computer program code that, when executed by the one or more processors, implements the operation of the processing apparatus 120. More detailed examples of using a computer apparatus to implement the processing apparatus 120 are described later in this text with references to Figure 3.

The location estimation via operation of the processing apparatus 120 may rely on attenuation of the one or more sounds emitted from a given sound-emitting node before their reception at a given sound-receiving node as a function of traveling distance of the sound, the extent of attenuation thereby serving as a measure that is indicative of the distance between the given sound-emitting node and the given sound-receiving node. In this regard, the processing apparatus 120 has access to predefined mapping data that defines the relationship between observed extent of attenuation of the one or more sounds and the corresponding traveling distance of the one or more sounds. The mapping may be based, for example, on the knowledge of the sound attenuation being substantially directly proportional to the traveling distance in the air and/or on the knowledge of the sound attenuating approximately 6 dB when the traveling distance in the air doubles.

The mapping between the observed extent of attenuation of the one or more sounds and the corresponding traveling distance of the sound may further consider spectral characteristics of the one or more sounds to account for higher sound attenuation characteristics at frequences above 2 kHz. Additionally or alternatively, the mapping may be adjusted based on knowledge of ambient characteristics in the one or more spaces or areas, such as air temperature, air pressure and air humidity, which may be measured e.g. via operation of one or more sensor apparatuses included in the lighting system 100. In this regard, e.g. increasing temperature results in increasing traveling distance of the one or more sounds, which may be accounted for in the location estimation procedure.

With the knowledge of the sound pressure level (SPL) of the one or more sounds upon their emission from the sound generator of the given sound-emitting node and the SPL upon their reception at the sound sensor of the given sound-receiving node, the processing unit 120 may apply the mapping data to estimate the distance between the given sound-emitting node and the given sound-receiving node. For brevity and clarity of the description, in the following the SPL of the one or more sounds upon their emission from the sound generator of the given sound-emitting node is referred to as a SPL at the sound-emitting node, whereas the SPL upon their reception at the sound sensor of the given sound-receiving node is referred as a SPL at the sound-receiving node.

In view of the above, the processing apparatus 120 may determine the distance between a given sound-receiving node and a given sound-emitting node based on the extent of attenuation indicated by the difference between the SPL at the given sound-emitting node and the SPL at the given sound-receiving node in consideration of the above-described mapping data. Moreover, the processing apparatus 120 may determine a respective distance between given two or more sound-receiving nodes and a given sound-emitting node based on the respective extents of attenuation indicated by the SPL at the given sound-emitting node and the respective SPLs at the given two or more sound-receiving nodes in consideration of the above-described mapping data. With the knowledge of the respective distances from the given two or more sound-receiving nodes to the given sound-emitting node, the processing apparatus 120 may further determine or estimate the location of the given sound-emitting node (i.e. its distance and direction) in relation to respective locations of the two or more sound-receiving nodes based on the determined distances e.g. via application of triangulation techniques known in the art.

Consequently the location estimation via operation of the processing apparatus 120 may involve, for example, one or more of the following:
- estimation of respective distances between a plurality of pairs of a sound-emitting node and a sound-receiving node based on attenuation of the one or more sounds between a respective pair of the sound-emitting node and the sound-receiving node,
- estimation of a respective relative location of each sound-emitting node in relation to respective locations of two or more sound-receiving nodes based on respective attenuation of the one or more sounds between the respective sound-emitting node and the respective two or more sound-receiving nodes

Each of the sound-receiving nodes may be arranged to determine respective SPLs of the one or more sounds captured therein and record the timing of deriving the respective SPLs. Moreover, each of the sound-receiving nodes may be arranged to deliver the respective SPLs and the timings of their derivation to the processing apparatus 120. The delivery of this data may be carried out over the lighting control network 130 and/or vie the external network 132, depending on the network topology applied to communicatively couple the processing apparatus 120 to the (other) nodes of the lighting control network 130.

Hence, the processing apparatus 120 may carry out a location estimation procedure that involves determining respective locations of at least some of the plurality of lighting network nodes 110 of the lighting control network 130 with respect to each other. Such information may be helpful in commissioning of the lighting system 100, for example, in context of installation, configuration or re-configuration of the lighting system 100 while it may be also helpful information that facilitates maintenance of the lighting system 100.

The sound generator included in a lighting network node 110-k that serves as a sound-emitting node may comprise any sound-generating apparatus that is capable of emitting one or more sounds having desired spectral and temporal characteristics at a desired SPL. Non-limiting examples in this regard include the following:
- A buzzer arranged to emit sound having predefined or selectable spectral characteristics under control of the lighting network node hosting the buzzer. In this example, the lighting network node 110-k may operate the buzzer provided therein to emit one or more sounds having desired spectral and temporal characteristics at desired SPL(s).
- A loudspeaker that is applicable for rendering a sound having desired spectral characteristics under control of the lighting network node hosting the speaker. In this example, the lighting network node 110-k may drive the loudspeaker provided therein to emit one or more sounds having desired spectral and temporal characteristics at desired SPL(s).

The sound sensor included in a lighting network node 110-k that serves as a sound-receiving node may comprise a suitable microphone known in the art and the lighting network node 110-k may be arranged to determine the respective SPLs of the one or more sounds captured by the microphone provided therein, record the derived SPL(s) together with the timing(s) of their derivation, and transmit the derived SPL(s) with the associated timing information to the processing apparatus 120 for distance estimation therein.

In a first scenario, the respective one or more sounds emitted from the sound-emitting nodes are arranged into a predefined sound sequence of one or more sounds and they are emitted from the sound generator of the respective sound-emitting node at a predefined SPL that is also known by the processing apparatus 120. In this regard, each sound-emitting node may operate its sound generator to emit, in response to a request from the processing apparatus 120, a respective predefined sound sequence of one or more sounds at the predefined SPL. In such an approach, the difference between the predefined SPL and SPLs derived at a given sound-receiving node based on the sounds captured therein based on the one or more sounds emitted from a given sound-emitting node readily indicates the attenuation of sounds between the given sound-emitting node and the given sound-receiving node, which may be readily mapped into a corresponding distance using the mapping data described above. In a variation of this example, the one or more sounds of the sound sequence may be emitted at a SPL that varies in a predefined manner instead using the predefined SPL, which likewise enables mapping from the observed attenuation of the one or more sounds into the corresponding distance.

Still referring to the first scenario, the predefined sound sequence may consist of one or more sounds that exhibit respective predefined spectral characteristics, that have respective predefined durations and that are emitted at respective predefined time intervals (in case of two or more sounds), the sequence of one or more sounds thereby forming a sound pattern of predefined spectral and temporal characteristics. In other words, the sound sequence may be defined by the frequency content of the sounds of the sound sequence together with the respective timing (i.e. the 'rhythm') of the temporally separate sounds that constitute the sound sequence.

According to an example, the spectral characteristics of the applied sounds may cover or include one or more frequencies in an audible range (from approximately 20 Hz to 20 kHz), whereas in another example the applied sounds may cover or include one or more frequencies in an infrasound range (below 20 Hz) and/or one or more frequencies in an ultrasound range (above 20 kHz) to avoid disturbing (human) occupants possibly present in the one or more spaces or areas. In examples where sounds in the audible range are used, the applied sounds may cover or include one or more frequencies that are lower than 1 kHz and/or higher than 3 kHz to avoid the frequency range to which the human hearing is most sensitive. Additionally or alternatively, sound sequences that include sounds at in the audible range may applied during times of the day during which the likelihood of presence of (human) occupants is relatively low to avoid generating any disturbance to the occupants. The frequency content of the applied sounds may remain substantially unchanged over time or the frequency content may change over time. In this regard, as described in the foregoing, the mapping from the observed attenuation of sounds to the corresponding traveling distance may account for the frequency-dependency of the traveling distance of the sound in ambient air.

According to an example, the respective durations of individual sounds of the sound sequence may be in a range of few seconds, where the most suitable duration may be chosen according to the circumstances, e.g. in consideration of the overall number of sound-emitting nodes in the lighting control network 130. The duration needs to be long enough to ensure reliable detection of the sound and derivation of the SPL at the sound-receiving node, while on the other hand the duration is preferably as short as possible to enable carrying out the distance estimation across the lighting control network 130 in a relatively short time in order to minimize the disturbance caused to the occupants of the one or more spaces or areas.

Stil referring to the first scenario, according to an example, each of the sound-emitting nodes apply the same or similar predefined sound pattern. This example enables straightforward configuration of the lighting network nodes serving as sound-emitting nodes and/or as sound-receiving nodes and guarantees that the SPLs derived at a sound-receiving node based on respective sound sequences received from different sound-emitting nodes are directly comparable to each other. On the other hand, emission of the same predefined sound pattern from each of the sound-emitting nodes requires allocating a dedicated time slot for each of the sound-emitting nodes to transmit its sound sequence under control of the processing apparatus 120 in order to enable associating each derived SPL with the sound-emitting node from which the one or more sounds applied as basis for deriving the respective SPL originates, which may result in prolonged duration of the location estimation procedure.

In another example within the framework of the first scenario, each of the sound-emitting nodes apply a respective dedicated predefined sound pattern that is different from the respective sound patterns applied by the other sound-emitting nodes. The differences between respective sound patterns applied by different sound-emitting nodes may involve differences in spectral characteristics of the emitted sounds, differences in respective durations of the emitted sounds and/or differences in respective time intervals between the emitted sounds. Such an approach enables also identifying the sound-emitting nodes based on the sound patterns captured at the sound-receiving nodes, while in examples where the sound patterns emitted from different sound-emitting nodes exhibit differences in their spectral characteristics it may be also possible to simultaneously emit and capture the respective one or more sounds from multiple sound-emitting nodes, thereby facilitating prompt completion of the location estimation procedure.

In a second scenario, the respective one or more sounds emitted from the sound-emitting nodes are arranged into a predefined sound sequence of one or more sounds and they are emitted from the sound generator of the respective sound-emitting node at a SPL that increases from one sound to another in a predefined manner. Hence, each sound-emitting node may operate its sound generator to emit, in response to a request from the processing apparatus 120, a respective predefined sound sequence where the SPL increases from one sound of the sequence to another in a predefined manner. In addition to the change in the SPL from one sound to the next one, also the initial SPL for the first sound of the sequence may be defined in advance and the information regarding the initial SPL and its change from one sound to the next one maybe also known by the processing apparatus 120.

In such an approach, it may not be strictly necessary to derive the SPLs of the captured sounds at the sound-receiving nodes, but it may be sufficient to record which sound of the sound sequence originating from a given sound-emitting node are detected at a given sound-receiving node. In particular, it is sufficient to identify, at the processing apparatus 120, which sounds of the sound sequence emitted from the given sound-emitting node are detected at the given sound-receiving node in order to identify the SPL that is sufficient for conveying the sound from the given sound-emitting node to the given sound-receiving node. Consequently, the processing apparatus 120 may apply (second) predefined mapping data that defines the relationship between a SPL and a corresponding distance to determine the distance between the given sound-emitting node and the given sound-receiving node.

In a variation of the above-described approach, the SPL may decrease in a predefined manner from one sound of the sound sequence to another, which likewise enables a sound-receiving node to identify the sound of the sound sequence and/or the SPL that is sufficient for delivering the sound from the respective sound-emitting node to the respective sound-receiving node and using the (second) predefined mapping data to determine the distance between these two nodes. Hence, this approach generalizes into one where the sound-emitting nodes emit a sound sequence of one or more sounds where the SPL changes from one sound to another in a predefined manner and where the distance between a given sound-emitting node and a given sound-receiving node is estimated based on SPLs of those sounds of the sound sequence transmitted from the respective sound-emitting node that are detected at the respective sound receiving node.

The spectral and temporal characteristics of the one or more sounds of the sound patterns emitted from the sound-emitting nodes in the second scenario may be similar to those described in the foregoing for the first scenario. Moreover, also in the second scenario, in one example, each of the sound-emitting nodes apply the same or similar predefined sound pattern, whereas in another example each of the sound-emitting nodes apply a respective dedicated predefined sound pattern that is different from the respective sound patterns applied by the other sound-emitting nodes.

While the distance estimation procedure provided via operating the plurality of sound-emitting nodes to emit the respective one or more sounds and operating the one or more sound-receiving nodes to capture the emitted sounds (to extent possible) necessarily results in somewhat rough estimates of the respective distances between nodes of the lighting control network 130 and/or somewhat rough estimates of the respective locations of the nodes of the lighting control network 130, it nevertheless provides information that is accurate enough to facilitate commissioning of the lighting system 100 e.g. upon its installation, configuration or reconfiguration. Moreover, an advantage of the disclosed sound-based location estimation is that it enables accounting for both horizontal and vertical components in respective positions the nodes of the lighting control network 130 with respect to each other, whereas previously known approaches typically only account for horizontal components of inter-node distances. This may be applicable, for example, for more reliably telling apart nodes that are arranged on the ceiling from nodes that are arranged on a wall or on desktop in respective locations that are close to each other in a horizontal plane.

As an example in this regard, the processing apparatus 120 may apply the distances and/or locations estimated for at least some of the plurality of lighting network nodes 110 to facilitate mapping of the respective locations of these lighting network nodes 110-k into a floorplan of the one or more spaces or areas. In a non-limiting example in this regard, the processing apparatus 120 may apply a following procedure:
- store or obtain a floorplan that indicates approximate locations of the plurality of lighting network nodes 110 within the one or more spaces,
- determine respective locations of the plurality of lighting network nodes 110 in the one or more spaces based on the floorplan and on the estimated respective locations of the plurality of lighting network nodes 110 in consideration of knowledge of respective locations of the plurality of light-emitting nodes and/or the one or more sound-receiving nodes in the one or more spaces the lighting system 100 serves to illuminate.

In a variation of the above example, the floorplan accessible by the processing apparatus 120 does not indicate the approximate locations of the plurality of lighting network nodes 110. However, also in such a scenario the floorplan provides the processing apparatus 120 with useful information that facilitates mapping of the respective locations of these lighting network nodes 110-k into the floorplan in consideration of the knowledge of their respective locations with respect to each other.

In another example, the processing apparatus 120 may apply the distances and/or locations estimated for at least some of the plurality of lighting network nodes 110 for identifying lighting network nodes that are in the same space or area within the one or more spaces or areas the lighting system 100 serves to illuminate. In a non-limiting example in this regard, the processing apparatus 120 may determine presence of one or more of the plurality of sound-emitting nodes in a same space with a given sound-receiving node based on attenuation of the one or more sounds between the plurality of sound-emitting nodes and the given sound-receiving node. Consequently, the devices found to be located in the same space may be assigned into a same device group, which may facilitate automated formation of luminaire groups within the lighting system 100.

In a particular example within this framework, the processing apparatus 120 may apply a predefined sound attenuation threshold such that those sound-emitting nodes for which the observed attenuation of sounds (i.e. reduction in sound level) is smaller than the sound attenuation threshold are considered to be in the same space with the given sound-receiving node, whereas those sound-emitting nodes for which the observed attenuation is not smaller than the sound attenuation threshold are considered to be in another space. In this regard, the attenuation may be considered via the SPL, e.g. via the extent attenuation indicated by the difference between the SPL at a given sound-emitting node and the SPL at the given sound-receiving node (cf. the first scenario described in the foregoing) or via a smallest SPL of sounds detected at the given sound-receiving node (cf. the second scenario described in the foregoing), possible in consideration of the frequency-dependency of the sound attenuation in ambient air.

The location estimation procedure described in the foregoing via the examples that pertain to operations carried out by the processing apparatus 120 may be also described as steps of a method. As an example in this regard, Figure 2 illustrates a method 200, which is carried in the framework of the lighting system 100 that comprises the plurality of lighting network nodes 110 that are communicatively coupled to each other via the lighting network 130, where the method 200 includes the following steps:
- emitting, from the plurality of sound-emitting nodes among the plurality of lighting network nodes 110, respective one or more sounds (block 202);
- capturing, at one or more sound-receiving nodes among the plurality of lighting network nodes 110, the respective one or more sounds emitted from at least one of the plurality of sound-emitting nodes (block 204); and
- estimating respective locations of the plurality of lighting network nodes 110 in the one or more spaces based on one or more spectral and/or temporal characteristic of sounds received at the one or more sound-receiving nodes in relation to respective characteristics of the respective sounds emitted from the plurality of sound-emitting nodes (block 206).

The method 200 may be implemented and/or varied in a number of ways, for example in accordance with the above-described examples that pertain to the operation of the processing apparatus 120 that implement various aspects of the location estimation procedure.

The examples described in the foregoing pertain to location estimation of lighting network nodes 110-k of the lighting system 100 based on sounds received at one or more lighting network nodes 110-k serving as respective sound-receiving nodes in consideration of the corresponding sounds emitted from the plurality of lighting network nodes 110 serving as respective sound-emitting nodes. In further examples, the sound-based location estimation described in the foregoing may be complemented with other location estimation techniques, such as one based on visibility of light output of luminaires of the lighting system 100 at other nodes of the lighting control network 130 and/or one based on received signal strength indicators (RSSIs) derived at nodes of the lighting control network 130 based on radio-frequency signals received from other nodes of the lighting control network 130.

In a further example, assuming application of sounds in the audible range, the processing apparatus 120 may apply the observed attenuation of the one or more sounds between sound-emitting nodes and sound-receiving nodes together with the floorplan to estimate traveling of sounds within the one or more spaces or areas. In particular, the processing apparatus 120 may apply these pieces of information to estimate `leakage' of sounds between rooms of the one or more spaces or areas.

Figure 3 illustrates a block diagram of some components of an apparatus 300 that may be employed to implement operations described in the foregoing with references to the processing apparatus 120. The apparatus 300 comprises a processor 310 and a memory 320. The memory 320 may store data and computer program code 325. The apparatus 300 may further comprise communication means 330 for wired and/or wireless communication with other apparatuses and/or user I/O (input/output) components 340 that may be arranged, together with the processor 310 and a portion of the computer program code 325, to provide the user interface for receiving input from a user and/or providing output to the user. The user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the processing apparatus 120. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the processing apparatus 120. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the processing apparatus 120. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the processing apparatus 120.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the processing apparatus 120. The computer-readable non-transitory medium may comprise a memory device, a record medium or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. A lighting system (100) for illuminating one or more spaces, the lighting system (100) comprising a plurality of lighting network nodes (110) and a processing apparatus (120),
wherein the plurality of lighting network nodes (110) are communicatively coupled to each other via a lighting control network (130) and wherein the processing apparatus (120) is communicatively coupled to at least one of the plurality of lighting network nodes (120),
wherein the plurality of lighting network nodes (120) comprises a plurality of sound-emitting nodes that each comprise a respective sound generator and one or more sound-receiving nodes that each comprise a respective sound sensor,
wherein each of the sound-emitting nodes is arranged to operate the respective sound generator to emit one or more sounds,
wherein each of the sound-receiving nodes is arranged to operate the respective sound sensor to capture the respective one or more sounds emitted from at least one of the plurality of sound-emitting nodes, and
wherein the processing apparatus (120) is arranged to estimate respective locations of the plurality of lighting network nodes (110) in said one or more spaces based on characteristic of sounds received at the one or more sound-receiving nodes in relation to characteristics of the respective sounds emitted from the plurality of sound-emitting nodes.

2. A lighting system (100) according to claim 1, wherein the processing apparatus (120) is communicatively coupled to said plurality of lighting network nodes (110) via the lighting control network (130).

3. A lighting system (100) according to claim 1 or 2, wherein one of said plurality of lighting network nodes (110) comprises the processing apparatus (120).

4. A lighting system (100) according to claim 1, wherein the processing apparatus (120) is coupled to at least one of the lighting network nodes via an external network (132) that is separate from the lighting control network (130).

5. A lighting system (100) according to any of claims 1 to 4, wherein the processing apparatus (120) arranged to estimate respective locations of the plurality of lighting network nodes (110) via estimating respective distances between a plurality of pairs of a sound-emitting node and a sound-receiving node based on attenuation of the one or more sounds between a respective pair of the sound-emitting node and the sound-receiving node.

6. A lighting system (100) according to claim 1 to 5, wherein the processing apparatus (120) is arranged to estimate respective locations of the plurality of lighting network nodes (110) via estimating a respective location of each sound-emitting node in relation to respective locations of two or more sound-receiving nodes based on respective attenuation of the one or more sounds between the respective sound-emitting node and the respective two or more sound-receiving nodes.

7. A lighting system (100) according to any of claims 1 to 6, wherein each sound-emitting node is arranged to emit, in response to a request from the processing apparatus, a respective predefined sound sequence of one or more sounds where the sound pressure level changes from one sound to another in a predefined manner and wherein the processing apparatus (120) is arranged to estimate a distance between a given sound-emitting node and a given sound-receiving node based on the sound pressure levels of those sounds of the predefined sound sequence transmitted from the respective sound-emitting node that are detected at the respective sound receiving node.

8. A lighting system (100) according to any of claims 1 to 6, wherein each sound-emitting node is arranged to emit, in response to a request from the processing apparatus (130), a respective predefined sound sequence of one or more sounds at a predefined sound pressure level.

9. A lighting system (100) according to any of claims 1 to 8, wherein each sound-emitting node is arranged to emit the one or more sounds that exhibit predefined spectral and temporal characteristics that are similar for each of the plurality of sound-emitting nodes.

10. A lighting system (100) according to any of claims 1 to 8, wherein each sound-emitting node is arranged to emit the one or more sounds that exhibit predefined spectral and temporal characteristics that are different from those of the one or more sounds emitted from other ones of the plurality of sound-emitting nodes.

11. A lighting system (100) according to any of claim 1 to 10, wherein the processing apparatus (130) is arranged to:
obtain a floorplan that indicates approximate locations of the plurality of lighting network nodes (110) within the one or more spaces; and
determine respective locations of the plurality of lighting network nodes (110) in said one or more spaces based on the floorplan and on the estimated respective locations of the plurality of lighting network nodes (110) in consideration of respective knowledge of respective locations of the plurality of light-emitting nodes and/or the one or more sound-receiving nodes in said one or more spaces.

12. A lighting system (100) according to any of claim 1 to 11, wherein the processing apparatus is arranged to:
determine presence of one or more of the plurality of sound-emitting nodes in a same space with a given sound-receiving node based on attenuation of the one or more sounds between the plurality of sound-emitting nodes and the given sound-receiving node.

13. A lighting system (100) according to any of claim 1 to 12, wherein the plurality of lighting network nodes (110) comprise one or more of the following:
one or more luminaires,
one or more sensor apparatuses,
one or more lighting control apparatuses,
one or more user interface apparatuses for controlling one or more aspects of operation of the lighting system.

14. A method (200) in a lighting system (100) applicable for illuminating one or more spaces, the lighting system (100) comprising a plurality of lighting network nodes (110) that are communicatively coupled to each other via a lighting control network (130), the method (200) comprising:
emitting (202), from a plurality of sound-emitting nodes among the plurality of lighting network nodes (110), respective one or more sounds;
capturing (204), at one or more sound-receiving nodes among the plurality of lighting network nodes, the respective one or more sounds emitted from at least one of the plurality of sound-emitting nodes; and estimating (206) respective locations of the plurality of lighting network nodes in said one or more spaces based on characteristic of sounds received at the one or more sound-receiving nodes in relation to characteristics of the respective sounds emitted from the plurality of sound-emitting nodes.
